# EUROPEAN PATENT SPECIFICATION

(11) **EP 3 382 289 B1**
(45) Date of publication and mention of the grant of the patent: **18.05.2022**
(21) Application number: 16868614.5
(22) Date of filing: 24.11.2016
(51) Int. Cl.: F24F 13/20, F24F 13/30, B60H 1/00, F24F 1/0011, F04D 29/44, F24F 1/0022

(54) **AIR CONDITIONER**
KLIMAANLAGE
CLIMATISEUR

(30) Priority: 24.11.2015 JP 2015228983
(43) Date of publication of application: 03.10.2018
(73) Proprietor: Mitsubishi Electric Corporation, Chiyoda-ku Tokyo 100-8310 (JP)
(72) Inventor: IMAMICHI Toya, Tokyo 100-8310 (JP)
(74) Representative: Studio Torta S.p.A.
(86) International application number: PCT/JP2016/084773
(87) International publication number: WO 2017/090671

(56) References cited:
- WO-A1-2015/151499
- CN-A- 1 932 395
- CN-A- 104 566 625
- JP-A- H10 220 858
- JP-A- 2005 003 278
- JP-A- 2006 145 109
- JP-U- H0 264 824
- JP-U- S5 837 416
- JP-U- S5 949 111
- KR-A- 20000 056 578

## Description

### Technical Field

The present invention relates to an air conditioner.

### Background Art

An air conditioner including a blower device having a centrifugal fan, and a heat-exchange device having a heat exchanger element, that heats and cools air discharged from the blower device has been proposed (refer to Patent Literature 1). In an air conditioner of this type, the heat-exchange element of the heat-exchange device typically is disposed in a region into which a majority of air discharged from the blower device flows.

In the air conditioner of this type, conceivably, the quantity of heat-exchange elements in the region, in which the majority of air discharged from the blower device flows into, is increased or the heat-exchange element is formed into a serpentine shape that meanders within that region, in order to increase the area of contact between the air and the heating element, thereby improving the heat-exchange efficiency of the heat-exchange device.

### Citation List

### Patent Literature

Patent Literature 1: Unexamined Japanese Patent Application Kokai Publication No. 2002-180995
Patent literature 2: WO2015/151499 describes an air conditioning device for a vehicle wherein a cooling heat exchanger is disposed within an air conditioning case provided with partition walls dividing the inside of the air conditioning case into a first air flow passage and a second air flow passage.
Patent literature 3: KR 2000 0056578 discloses an air conditioning device designed for cooling or heating operation and air cleaning operation via separate channels so that one channel is selectively used for reducing power consumption, and increase efficiency.
Patent literature 4: JP H10 220858 describes relates to a floor or ceiling air conditioner blowing air from front, rear, left and right directions.

### Summary of Invention

### Technical Problem

However, in such cases, the air-path resistance in the heat-exchange device may thereby increase causing the airflow speed of the air blown out by the air conditioner to drop, and efficient air conditioning of a target space by the air conditioner may not therefore be achieved. Also, if, in order to improve heat exchange efficiency, the quantity of heat-exchange elements is increased in the region into which the majority of the air discharged by the blower device flows, the air conditioner may need to be increased in size proportionate to the increase in the quantity of heat-exchange elements.

In consideration of the aforementioned circumstances, an objective of the present disclosure is to provide an air conditioner that provides high heat-exchange efficiency and is compact in size.

### Solution to Problem

In order to attain the aforementioned objective there is provided, an air-conditioner as defined in claim 1.

### Advantageous Effects of Invention

According to the present disclosure, the second casing is configured such that the flow of air introduced into the interior of the second casing via the introduction opening spreads out in the lengthwise direction of the heat-exchange element. Therefore, the length of the portion of the heat-exchange element contacted by air introduced via the introduction opening can be further extended in the lengthwise direction of the heat-exchange element, thereby improving heat-exchange efficiency of the heat-exchange device while preventing an increase in air-path resistance in the heat-exchange device. Thus, efficient air conditioning of a target space can be achieved. Also, since the heat-exchange efficiency of the heat-exchange device can be improved without increasing the quantity of heat-exchange elements, a compact air conditioner with improved heat-exchange efficiency can be achieved.

### Brief Description of Drawings

FIG. 1A is a cross-sectional view of an air conditioner according to Embodiment 1 of the present invention ;
FIG. 1B is a side elevational view of the air conditioner according to Embodiment 1 making part of the invention;
FIG. 2A is a cross-sectional view of an air conditioner in a comparative example not making part of the invention;
FIG. 2B is a side elevational view of the air conditioner in the comparative example not making part of the invention;
FIG. 3 is a cross-sectional view of an air conditioner in Embodiment 2 of the present invention; ;
FIG. 4 is a cross-sectional view of an air conditioner in Embodiment 3 of the present invention; ;
FIG. 5A is a cross-sectional view of an air conditioner in a modified example of the present invention ;
FIG. 5B is a fragmentary side elevational view taken along line A-A of FIG. 5A; and
FIG. 6 is a fragmentary side elevational view of the air conditioner according to a modified example not making part of the present invention .

### Description of Embodiments

Embodiments of an air conditioner of the present disclosure are described below in detail with reference to the drawings.

### Embodiment 1

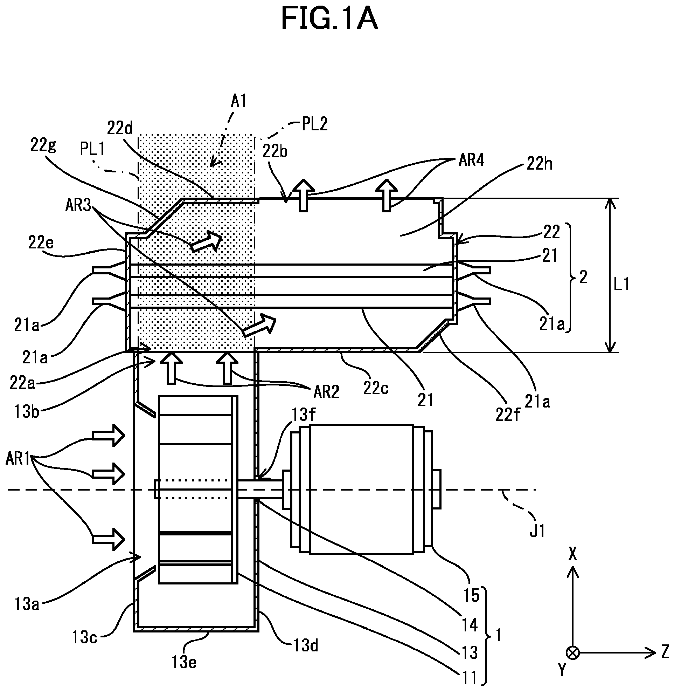

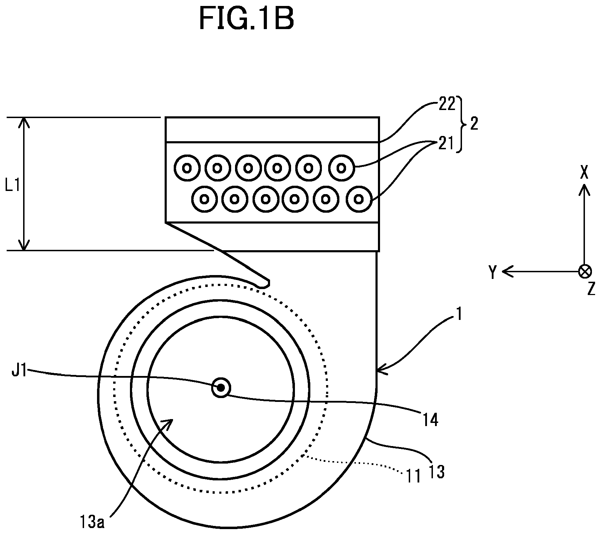

An air conditioner according to the present embodiment is mounted on a railway vehicle. This air conditioner, as illustrated in FIGS. 1A and 1B, includes a blower device 1 and heat-exchange device 2. The blower device 1 includes a centrifugal fan 11, a first casing 13 that houses the centrifugal fan 11, a shaft 14, and a motor 15 that drives the centrifugal fan 11.

The centrifugal fan 11 sucks in air, as indicated by arrows AR1 of FIG. 1A, from one side in a direction of a rotation axis J1 of the centrifugal fan 11 by rotating the centrifugal fan 11 about the rotation axis J1 and discharges the air, as indicated by arrows AR2 of FIG. 1A, in a direction perpendicular to the rotation axis J1. The centrifugal fan 11 is connected to the motor 15 via the shaft 14. Hereinafter, for the sake of convenience, the direction of the rotation J1 of the centrifugal fan 11 is referred to as the Z-axis direction, the direction that is perpendicular to the direction in the rotation axis J1 and extends along the arrangement of the blower device 1 and the heat-exchange device 2 one after another is referred to the X-axis direction, and the direction perpendicular to the Z-axis direction and the X-axis direction is referred to as the Y-axis direction.

The first casing 13 is shaped like a generally flat box and includes main walls 13c and 13d that are of the same shape and mutually oppose each other in the Z-axis direction, and a side wall 13e that encloses the region between the main walls 13c and 13d. The centrifugal fan 11 is disposed inside of the first casing 13 such that the rotation axis J1 of the centrifugal fan 11 is along the thickness direction of the first casing 13. The main wall 13c of the first casing 13 is provided with an intake opening 13a facing the centrifugal fan 11. Also, a portion of the side wall 13e of the first casing 13 is provided with a discharge opening 13b. The main wall 13d is provided with a hole 13f enabling the shaft 14 to be inserted therethrough.

The motor 15 is arranged on one side along the rotation axis J1 with respect to the first casing 13.

The heat-exchange device 2, as illustrated in FIG. 1B, includes twelve heater elements 21 that are heat-exchange elements and a second casing 22 that houses the heater elements 21. Each heater element 21 includes a heating element such as a resistance wire. Each heater element 21 is long and is supplied with electrical power from outside of the second casing 22, via a connection portion 21a at both ends of the heater element 21 in the lengthwise direction thereof. The heater element 21 is arranged such that lengthwise direction is parallel with the rotation axis J1 of the centrifugal fan 11. A portion of the heater element 21 is arranged beyond region A1 being the region into which a majority of the air discharged via the discharge opening 13b of the first casing 13 assumedly flows, when the blower device 1 alone is used. Region A1 includes the edges of the discharge opening 13b of the first casing 13 in the rotation axis J1 direction (Z-axis direction) of the centrifugal fan 11 and corresponds to an area defined between two virtual planes PL1 and PL2 that are perpendicular to the rotation axis J1 of the centrifugal fan 11. Also, the heater element 21 has a portion extending in the Z-axis direction beyond the centrifugal fan 11 on the motor 15 side.

The second casing 22 is generally cuboid-shaped and includes main walls 22c and 22d facing each other in the X-axis direction, a pair of side walls 22e facing each other in the Z-axis direction, and a pair of side walls 22h facing each other in the Y-axis direction. Of the two main walls 22c and 22d, the main wall 22c that is arranged on the blower device 1 side is provided with an introduction opening 22a for introducing into the interior of the second casing 22 air discharged through the discharge opening 13b by the blower device 1. Also, of the two main walls 22c and 22d, the main wall 22d that is on a side opposite to the side of the blower device 1 is provided with an ejection opening 22b for ejecting air that is introduced into the interior of the second casing 22 and heat-exchanged by the heater element 21. Also, the second casing 22 has a portion extending in the Z-axis direction beyond the centrifugal fan 11 on the motor 15 side.

The introduction opening 22a is provided in the main wall 22c on one end of the second casing 22 in the lengthwise direction of the second casing 22. The ejection opening 22b is provided in the main wall 22d on the other end of the second casing 22 in the lengthwise direction of the second casing 22. In other words, the ejection opening 22b is provided at a position displaced with respect to the introduction opening 22a in the lengthwise direction of the heater element 21, as viewed from the direction perpendicular to the lengthwise direction of the heater element 21. Therefore, the air introduced via the introduction opening 22a, flows along the lengthwise direction of the heater element 21 toward the outside of region A1 as indicated by arrows AR3 of FIG. 1A, and then is ejected via the ejection opening 22b to outside of the second casing 22 as indicated by arrows AR4 of FIG. 1A.

In the main wall 22c, at the end on the side opposite to the side of the introduction opening 22a in the lengthwise direction of the main wall 22c, a slanted portion 22f is provided slanting so as to approach the side of the main wall 22d as distance from the introduction opening 22a increases. Also, in the main wall 22d, at the end on the side opposite to the side of the ejection opening 22b in the lengthwise direction of the main wall 22d, a slanted portion 22g is provided slanting so as to approach the side of the main wall 22c as distance from the ejection opening 22b increases. Thus, a portion of the air flowing via the introduction opening 22a directly forward into the interior of the second casing 22 comes into contact with the slanted portion 22g and gets directed toward the ejection opening 22b. Also, a portion of the air flowing via the introduction opening 22a into the interior of the second casing 22 and toward an end on the side opposite to the side of the introduction opening 22a, comes into contact with the slanted portion 22f and gets directed toward the ejection opening 22b.

In this manner, the second casing 22 is provided with the ejection opening 22b at a position displaced in the lengthwise direction of the heater element 21 with respect to the introduction opening 22a and also is provided with the slanted portions 22f and 22g in the main walls 22c and 22d, respectively. Thus, the air introduced via the introduction opening 22a spreads through the entirety of the interior of the second casing 22, comes in contact with the entirety of each heater element 21, undergoes heat each exchange, and then is ejected from the ejection opening 22b.

The heater element 21 and the second casing 22 each have a portion extending in the Z-axis direction beyond the centrifugal fan 11 on the motor 15 side.

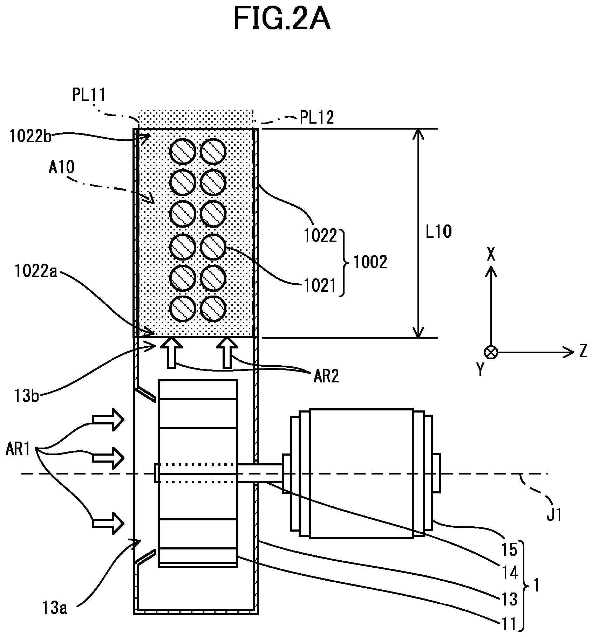

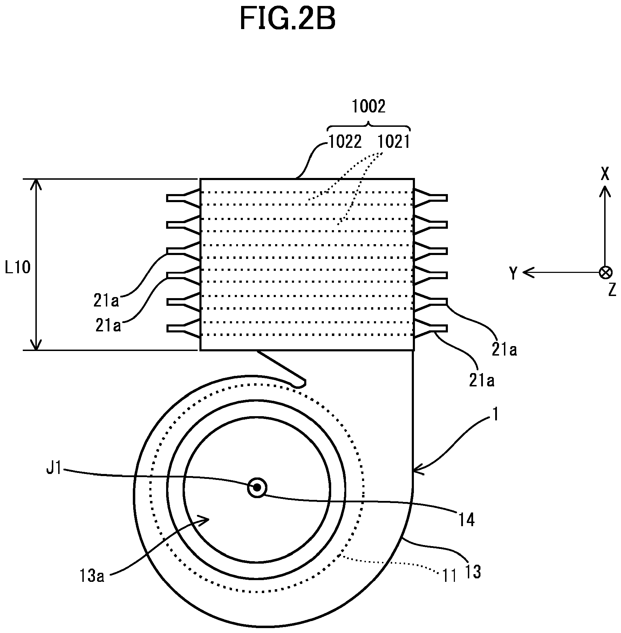

Next, the features of the air conditioner according to the present embodiment are described compared with that in a comparison example. In an air conditioner according to the comparison example, as illustrated in FIGS. 2A and 2B, there are twelve heater elements 1021 that are rod-shaped and arranged entirely within region A10 being a region into which a majority of the air discharged via the discharge opening 13b of the first casing 13 assumedly flows, when the blower device 1 alone is used. More specifically, the twelve heater elements 1021 are arranged such that the lengthwise direction of each heater element 1021 is parallel with the direction perpendicular to the rotation axis J1 of the centrifugal fan 11, two of the heater elements 1021 being arrayed in the rotation axis J1 direction of the centrifugal fan 11 (Z-axis direction), and six of the heater elements 1021 being arrayed in the direction perpendicular to the rotation axis J1 of the centrifugal fan 11 and perpendicular to the lengthwise direction of the heater elements 1021 (X-axis direction). Region A10 includes the edges of the discharge opening 13b of the first casing 13 in the rotation axis J1 direction (Z-axis direction) of the centrifugal fan 11 and corresponds to an area defined between two virtual planes PL11 and PL12 that are perpendicular to the rotation axis J1 of the centrifugal fan 11.

Length L10 in the X-axis direction of the second casing 1022 is set to a length long enough for the second casing 1022 to house the six heater elements 1021 arrayed in the X-axis direction.

Conversely, in the air conditioner according to the present embodiment, as illustrated in FIGS. 1A and 1B, the twelve heater elements 21 are arranged such that the lengthwise direction of each heater element 21 is parallel with the rotation axis J1 of the centrifugal fan 11, six of the heater elements 21 being arrayed in the Y-axis direction, and the heater elements 21 being arrayed in twos in the X-axis direction. Further, length L1 in the X-axis direction of the second casing 22 is set to a length long enough for the second casing 22 to house the two heater elements 21 arrayed in the X-axis direction. In other words, the length L1 in the X-axis direction of the second casing 22 is shorter compared with the length L10 of the second casing 1022 in the X-axis direction according to the comparative example illustrated in FIGS. 2A and 2B. Therefore, the overall length in the X-axis direction of the air conditioner according to the present disclosure can be made shorter than that of the air conditioner according to the comparative example, because the length of the second casing 22 in the X-axis direction in the present embodiment is less than the length of the second casing 1022 in the X-axis direction in the comparative example. Further, the air conditioner of the present embodiment can be made more compact than the air conditioner according to the comparative example.

As described above, in the air conditioner according to the present embodiment, the second casing 22 is configured such that the flow of air introduced into the interior of the second casing via the introduction opening 22a spreads out in the lengthwise direction of the heating element 21. Therefore, in the lengthwise direction of the heater element 21, the length of the heater element 21 portion that is contacted by air introduced via the introduction opening 22a can be extended, and thus heat-exchange efficiency of the heat-exchange device 2 can be improved. In this manner, the heat-exchange efficiency of the heat-exchange device 2 can be improved without increasing the quantity of heater elements 21, and thus an increase in air-path resistance in the heat-exchange device 2 can be prevented and a drop in airflow speed of the air blown out by the air conditioner can be suppressed. Therefore, efficient air conditioning of a target space can be achieved. Also, since the heat-exchange efficiency of the heat-exchange device 2 can be improved without increasing the quantity of heater elements 21, a compact air conditioner with improved heat-exchange efficiency can be achieved.

Also, in the air conditioner according to the present embodiment, the ejection opening 22b is provided at a position displaced with respect to the introduction opening 22a in the lengthwise direction of heater element 21, as viewed from the direction perpendicular to the lengthwise direction of the heater element 21. Therefore, the flow of air introduced inside the second casing 22 via the introduction opening 22a can be directed in the lengthwise direction of the heater element 21 with a relatively simple configuration, thereby simplifying the configuration of the second casing 22.

Furthermore, in the air conditioner according to the present embodiment, the heater element 21 and the second casing 22 each have at least a portion extending in the rotation axis J1 direction beyond the centrifugal fan 11 on the motor 15 side. Therefore, the motor 15, the heater element 21, and the second casing 22 can be tightly arranged in a relatively small space, thereby reducing the overall size of the air conditioner.

### Embodiment 2

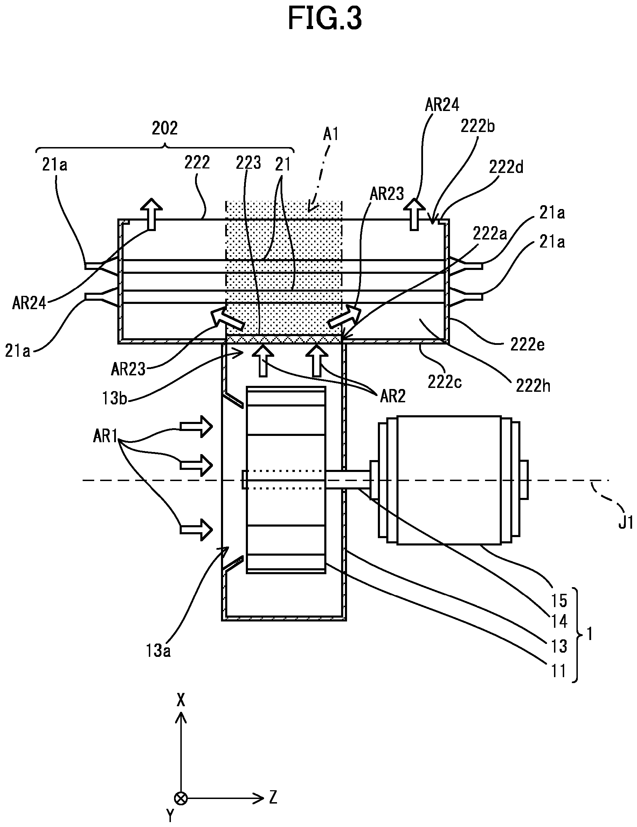

A heat-exchange device 202 of an air conditioner according to the present embodiment, as illustrated in FIG. 3, is different from that in Embodiment 1 in that the heat-exchange device 202 includes a second casing 222 provided with an introduction opening 222a in the midsection thereof and a porous member 223 covering the introduction opening 222a of the second casing 222. In this heat-exchange device 202, the existence of the porous member 223 causes a portion of air introduced via the introduction opening 222a to flow in a spreading manner in the lengthwise direction of the heater element 21. In FIG. 3, the same components as in Embodiment 1 are given the same references numbers as in FIGS. 1A and 1B.

The second casing 222 has a flat cuboid-like shape and includes main walls 222c and 222d facing each other in the X-axis direction, a pair of side walls 222e facing each other in the Z-axis direction, and a pair of side walls 222h facing each other in the Y-axis direction. The introduction opening 222a is provided in the midsection of the main wall 222c that is arranged on the blower device 1 side. Also, an ejection opening 222b is provided in the main wall 222d on the side opposite to the blower device 1 wide.

The porous member 223 includes a mesh member formed from perforated metal, metal, or a resin.

The existence of the porous member 223 causes air discharged by the blower device 1 to the introduction opening 222a of the second casing 222 to flow in a spreading manner to beyond region A1, as indicated by arrows AR23 of FIG. 3. This region A1, as described in Embodiment 1, is the region into which a majority of the air discharged via the discharge opening 13b of the first casing 13 assumedly flows, when the blower device 1 alone is used. Here, a portion of the air discharged to the introduction opening 222a of the second casing 222 by the blower device 1 flows in a spreading manner in the lengthwise direction of the heater element 21. The air flowing in a spreading manner in the lengthwise direction of the heater element 21 undergoes heat exchange across the entire lengthwise direction of the heater element 21 and then is ejected via the ejection opening 222b to the outside of the second casing 222 as indicated by arrows AR24 of FIG 3.

In the air conditioner according to the present embodiment, the porous member 223 covers the introduction opening 222a of the second casing 222. Therefore, in the lengthwise direction of the heater element 21, the length of the heater element 21 portion that is contacted by air introduced via the introduction opening 222a can be extended, and thus heat-exchange efficiency of the heat-exchange device 202 can be improved, as in Embodiment 1.

### Embodiment 3

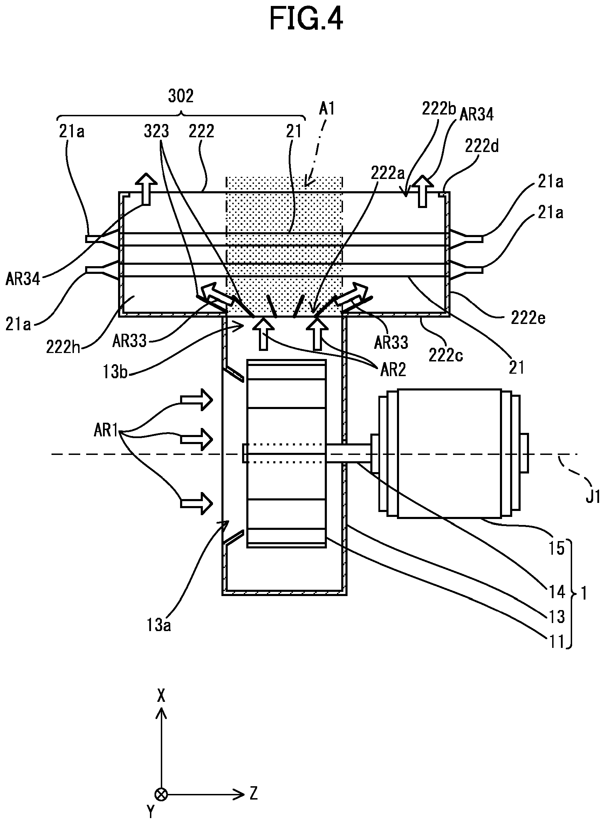

A heat-exchange device 302 of an air conditioner according to the present embodiment, as illustrated in FIG. 4, is different from that in Embodiment 1 in that the heat-exchange device 302 includes the second casing 222 described in Embodiment 2 and an airflow-directing plate 323 that directs the air flow introduced through the introduction opening 222a of the second casing 222 into the lengthwise direction of the heater element 21. The existence of the airflow-directing plate 323 in this heat-exchange device 302 causes a portion of the air introduced via the introduction opening 222a to flow in a spreading manner along lengthwise direction of the heater element 21. In FIG. 4, the same components as in Embodiment 1 and Embodiment 2 are given the same references numbers as in FIGS. 1A, 1B, and FIG. 3.

The airflow-directing plate 323 is arranged in close proximity to the introduction opening 222a on the inside of the second casing 222. The airflow-directing plate 323 is formed from metal or resin.

Because of the existence of airflow-directing plate 323, the air discharged by the blower device 1 via the discharge opening 13b to the introduction opening 222a of the second casing 222 flows in a spreading manner beyond region A1 as indicated by arrows AR33 of FIG. 4. Here, a portion of the air discharged by the blower device 1 to the introduction opening 222a of the second casing 222 flows in a spreading manner in the lengthwise direction of the element 21. The air flowing in a spreading manner in the lengthwise direction of the heater element 21 undergoes heat exchange across the entire lengthwise direction of the heater element 21 and then is ejected via the ejection opening 222b to the outside of the second casing 222 as indicated by arrows AR34 of FIG 4.

In the air conditioner according to the present embodiment, the airflow-directing plate 323 redirects the flow of air introduced via the introduction opening 222a of the second casing 222 into the lengthwise direction of the heater element 21. Therefore, as in Embodiment 1, with the present configuration, the length of the heater element 21 portion that is contacted by air introduced via the introduction opening 222a can be extended in the lengthwise direction of the heater element 21, and thus the heat-exchange efficiency of the heat-exchange device 302 can be improved.

### Comparative Example

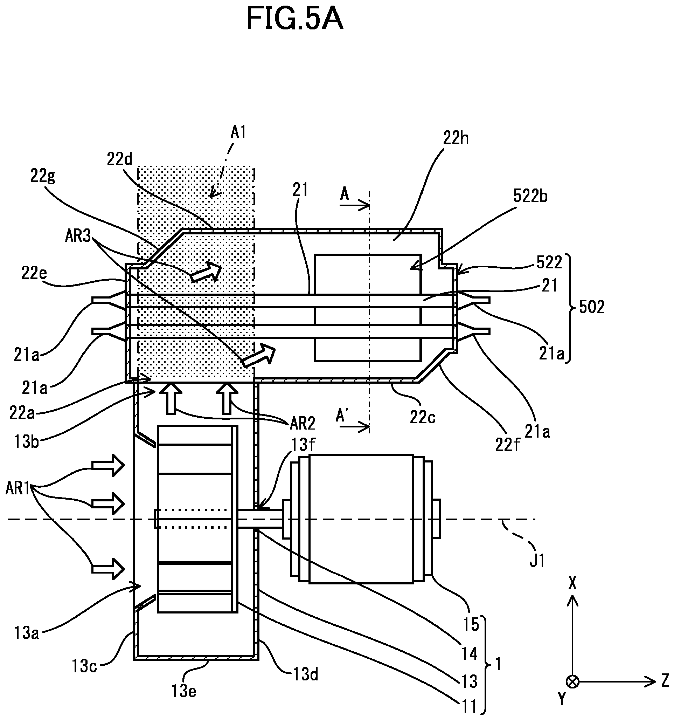

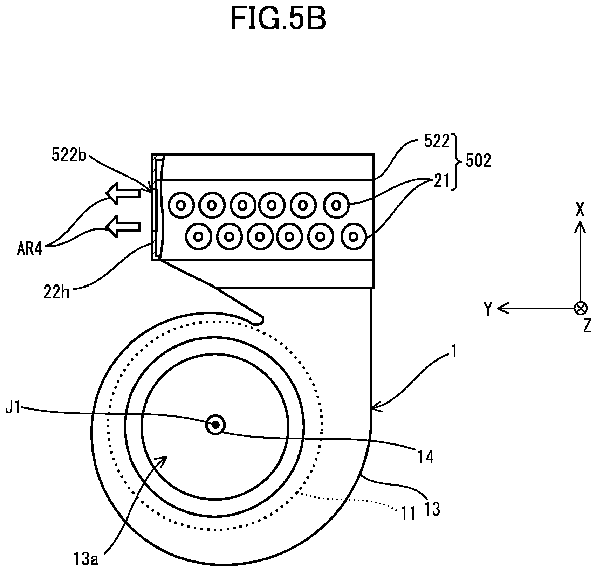

Embodiments of the present disclosure are described above. However, the present disclosure is not restricted to those embodiments. As illustrated in FIGS. 5A and 5B, in the heat-exchange device 502, the ejection opening 522b of the second casing 522 may be provided in a location beyond region A1 in the side wall 22h of the second casing 522. In such a case, the air introduced via the introduction opening 22a, flows beyond region A1 as indicated by arrows AR3 of FIG. 5A and then is ejected to outside of the second casing 522 via the ejection opening 522b as indicated by arrows AR4 of FIG. 5B.

As in Embodiment 1, with the present configuration, the length of the heater element 21 portion that is contacted by air introduced via the introduction opening 22a can be extended in the lengthwise direction of the heater element 21. Therefore, the heat-exchange efficiency of the heat-exchange device 502 can be improved.

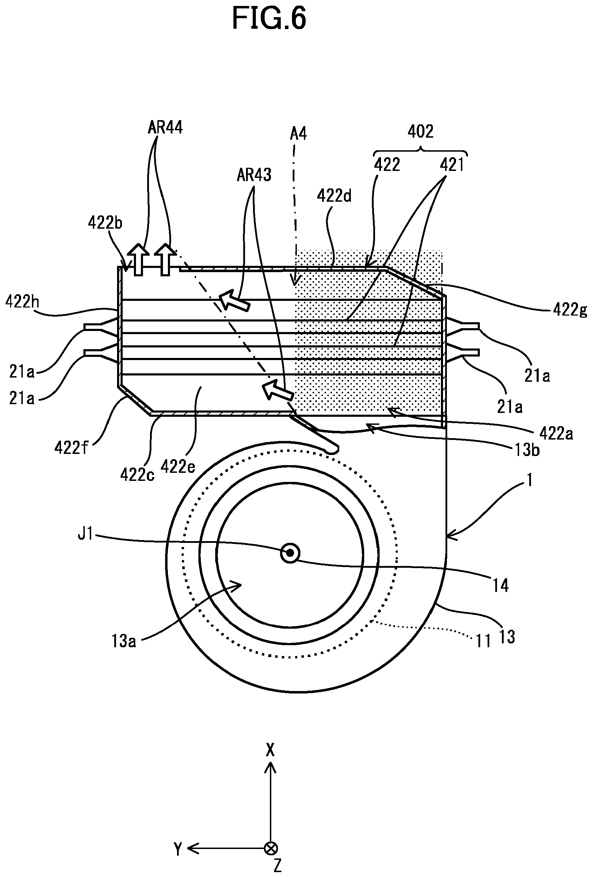

Also, in the Embodiments described above, each heat heater element 21 is arranged to be parallel with the rotation axis J1 of the centrifugal fan 11. However, the heater element 21 is not restricted to this arrangement. As illustrated in FIG. 6, each heater element 421 of a heat-exchange 402 may be arranged parallel with a direction perpendicular to the rotation axis J1 of the centrifugal fan 11. In such a case, an ejection opening 422b of a second casing 422 opposing an introduction opening 422a of the second casing 422 across the heater element 21, preferably is provided at a position displaced with respect to the introduction opening 422a in the lengthwise direction of the heater element 21, as viewed from the direction perpendicular to the lengthwise direction of the heater element 21.

In a manner similar with that of Embodiment 1, the second casing 422 has a flat cuboid-like shape and includes main walls 422c and 422d, a pair of side walls 422e facing each other in the Z-axis direction, and a pair of side walls 422h facing each other in the Y-axis direction. The second casing 422 arranged such that the lengthwise direction of the second casing 422 is perpendicular to the rotation axis J1 of the centrifugal fan 11. The introduction opening 422a is provided in the main wall 422c on one end of the second casing 422 in the lengthwise direction of the second casing 422 and the ejection opening 422b is provided in the main wall 422d on the other end of the second casing 422 in the lengthwise direction of the second casing 422. Thus, the air introduced via the introduction opening 422a flows in a spreading manner beyond region A4. This region A4, as described in Embodiment 1, is the region into which a majority of the air discharged via the discharge opening 13b of the first casing 13 assumedly flows, when the blower device 1 alone is used.

Therefore, the air introduced via the introduction opening 422a, flows beyond region A4 in the lengthwise direction of the heater element 21 as indicated by arrows AR43 of FIG. 6 and then is ejected to the outside of the second casing 422 via the ejection opening 422b as indicated by arrows AR44 of FIG. 6.

Further, in the main wall 422c, at the end opposite to the side of the introduction opening 422a in the lengthwise direction of the main wall 422c, a slanted portion 422f is provided slanting so as to approach the side of the side of the main wall 422d as distance from the introduction opening 422a increases. Also, in the main wall 422d, at the end on the side opposite to the side of the ejection opening 422b in the lengthwise direction of the main wall 422d, a slanted portion 422g is provided slanting so as to approach the side of the main wall 422c as distance from the ejection opening 422b increases. Therefore, in a manner similar to that of Embodiment 1, a portion of the air flowing via the introduction opening 422a directly forward into the interior of the second casing 422 comes into contact with the slanted portion 422g and gets directed toward the ejection opening 422b. Also a portion of the air flowing via the introduction opening 422a into the interior of the second casing 422 toward an end on the side opposite to the side of the introduction opening 422a, comes into contact with the slanted portion 422f and gets directed toward the ejection opening 422b.

With the current configuration, in the lengthwise direction of the heater element 21, the length of the heater element 21 portion that is contacted by air introduced via the introduction opening 422a can be extended. Therefore, heat-exchange efficiency of the heat-exchange device 402 can be improved.

The introduction opening 22a of the second casing 22 of the heat-exchange device 2 according to aforementioned Embodiment 1 may be covered by the porous member described in Embodiment 2. The heat-exchange device 2 may be equipped with the airflow-directing plate described in Embodiment 3, in close proximity to the introduction opening 22a of the second casing 22.

In the aforementioned embodiments, the heat-exchange device 2 is described as having the heater element 21. However, this is intended to be illustrative and not limiting. Instead of having the heater element 21, the heat-exchange device 2 may have a refrigerant pipe (not illustrated) filled with refrigerant instead. In such a case, the air introduced into the interior of the heat-exchange device 2 by the blower device 1 is cooled by the refrigerant pipe and then is ejected.

In the blower device 1 according to the aforementioned embodiments, the motor 15 is described as being connected directly to shaft 14. However, this is intended to be illustrative and not limiting. The shaft 14 may be connected to the motor 15 via a gear mechanism such as a reduction gear.

### Industrial Applicability

The present disclosure is suitably applicable to air conditioners mounted on railway vehicles.

### Reference Signs List

1 Blower device
2, 202, 302, 402, 502 Heat-exchange device
11 Centrifugal fan
13 First casing
13a Intake opening
13b Discharge opening
13c, 13d, 22c, 22d, 222c, 222d, 422c, 422d Main wall
13e, 22e, 22h, 222e, 222h, 422e, 422h Side wall
13f Hole
14 Shaft
15 Motor
21, 421 Heater element
21a Connection portion
22, 222, 322, 422, 522, Second casing
22a, 222a, 422a Introduction opening
22b, 222b, 422b, 522b Ejection opening
22f, 22g, 422f, 422g Slanted portion

## Claims

1. An air conditioner **characterized by** comprising:
a blower device (1) comprising:
a centrifugal fan (11); and
a first casing (13) that houses the centrifugal fan (11), the first casing (13) having an intake opening (13a) provided at a location in a direction of a rotation axis (J1) of the centrifugal fan (11) at which the intake opening (13a) faces the centrifugal fan (11) and having a discharge opening (13b) provided at a location in a circumferential wall (13e) of the first casing (13) at which the discharge opening (13b) faces the centrifugal fan (11) in a direction perpendicular to the rotation axis (J1) of the centrifugal fan (11); and
a heat-exchange device (2) comprising:
a heat-exchange element (21) that is pillar-shaped; and
a second casing (22) that is cuboid-shaped and houses the heat-exchange element (21), the second casing (22) having an introduction opening (22a) for introducing into an interior of the second casing (22) air discharged, via the discharge opening (13b), by the centrifugal fan (11) and having an ejection opening (22b) for ejecting, to outside of the second casing (22), air introduced into the interior of the second casing (22) and heat-exchanged by the heat-exchange element (21),
**characterized in that** the heat-exchange device (2) comprises a number of heater elements (21) arranged such that the lengthwise direction of each heater element (21) is parallel with the rotation axis (J1) of the centrifugal fan (11);
a portion of each heater element (21) is arranged beyond region A1 being the region into which a majority of the air discharged via the discharge opening (13b) of the first casing (13) flows, when the blower device (1) is used; said region A1 includes the edges of the discharge opening (13b) of the first casing (13) in the rotation axis (J1) direction of the centrifugal fan (11) and corresponds to an area defined between two virtual planes PL1 and PL2 that are perpendicular to the rotation axis J1 of the centrifugal fan (11);
wherein the second casing (22) is configured such that a flow of air introduced into the interior of the second casing (22) via the introduction opening (22a) spreads out in a lengthwise direction of the heat-exchange element (21) coming in contact with the entirety of each heater element (21).

2. The air conditioner according to claim 1, wherein the ejection opening (22b) is provided at a location displaced with respect to the introduction opening (22a) in the lengthwise direction of the heat-exchange element (21) as viewed from a direction perpendicular to the lengthwise direction of the heat-exchange element (21).

3. The air conditioner according to claim 1 or 2, **characterized in that**
the blower device (1) further comprises a motor (15) that drives the centrifugal fan (11), the motor (15) arranged on one side of the first casing (13), along the rotation axis (Jl), and
the heat-exchange element (21) and the second casing (22) each have at least a portion extending in the direction of the rotation axis (J1) beyond the centrifugal fan (11) on a side of the motor (15) .

4. The air conditioner according to claim 1 or 2, **characterized in that** the heat-exchange device (202) further comprises a porous member (223) that covers the introduction opening (222a) of the second casing (222).

5. The air conditioner according to claim 1 or 2 , **characterized in that** the heat-exchange device (302) further comprises an airflow-directing plate (323) that directs a flow of air introduced via the introduction opening (222a) of the second casing (322) into the lengthwise direction of the heat-exchange element (21).

## Patentansprüche

1. Klimaanlage, umfassend:
- eine Gebläsevorrichtung (1), umfassend:
-- einen Fliehkraftlüfter (11); und
-- ein erstes Gehäuse (13), welches den Fliehkraftlüfter (11) aufnimmt, wobei das erste Gehäuse (13) eine Einlassöffnung (13a) aufweist, welche an einer Stelle in einer Richtung einer Drehachse (J1) des Fliehkraftlüfters (11) vorgesehen ist, an welcher die Einlassöffnung (13a) dem Fliehkraftlüfter (11) zugewandt ist, und eine Auslassöffnung (13b), welche an einer Stelle in einer Umfangswand (13e) des ersten Gehäuses (13) vorgesehen ist, an welcher die Auslassöffnung (13b) dem Fliehkraftlüfter (11) in einer Richtung senkrecht zur Drehachse (J1) des Fliehkraftlüfters (11) zugewandt ist; und
- eine Wärmetauschvorrichtung (2), umfassend:
-- ein Wärmeaustauschelement (21), welches säulenförmig ist; und
-- ein zweites Gehäuse (22), welches quaderförmig ist und das Wärmeaustauschelement (21) aufnimmt, wobei das zweite Gehäuse (22) eine Einführöffnung (22a) zum Einführen von durch den Fliehkraftlüfter (11) über die Auslassöffnung (13b) ausgestoßener Luft in das Innere des zweiten Gehäuses (22) und eine Ausstoßöffnung (22b) zum Ausstoßen von in das Innere des zweiten Gehäuses (22) eingeführter und durch das Wärmeaustauschelement (21) wärmeausgetauschter Luft nach außerhalb des zweiten Gehäuses (22) aufweist,
**dadurch gekennzeichnet, dass** die Wärmeaustauschvorrichtung (2) eine Anzahl von Heizelementen (21) umfasst, welche so angeordnet sind, dass die Längsrichtung jedes Heizelements (21) parallel zur Drehachse (J1) des Fliehkraftlüfters (11) ist;
ein Teil jedes Heizelements (21) jenseits des Bereichs A1 angeordnet ist, welcher der Bereich ist, in welchen ein Großteil der durch die Auslassöffnung (13b) des ersten Gehäuses (13) ausgestoßenen Luft strömt, wenn die Gebläsevorrichtung (1) verwendet wird; der Bereich A1 die Ränder der Auslassöffnung (13b) des ersten Gehäuses (13) in Richtung der Drehachse (J1) des Fliehkraftlüfters (11) einschließt und einer Fläche entspricht, welche zwischen zwei virtuellen Ebenen PL1 und PL2 definiert ist, welche senkrecht zur Drehachse J1 des Fliehkraftlüfters (11) verlaufen;
wobei das zweite Gehäuse (22) so konfiguriert ist, dass sich ein in das Innere des zweiten Gehäuses (22) über die Einführöffnung (22a) eingeführter Luftstrom in einer Längsrichtung des Wärmetauschelements (21) ausbreitet und mit der Gesamtheit jedes Heizelements (21) in Kontakt kommt.

2. Klimaanlage nach Anspruch 1, wobei die Ausstoßöffnung (22b) an einer Stelle vorgesehen ist, welche in Bezug auf die Einführöffnung (22a), gesehen aus einer Richtung senkrecht zur Längsrichtung des Wärmetauschelements (21), in der Längsrichtung des Wärmetauschelements (21) versetzt ist.

3. Klimaanlage nach Anspruch 1 oder 2, **dadurch gekennzeichnet, dass** die Gebläsevorrichtung (1) ferner einen Motor (15) umfasst, welcher den Fliehkraftlüfter (11) antreibt, wobei der Motor (15) auf einer Seite des ersten Gehäuses (13) entlang der Drehachse (J1) angeordnet ist und das Wärmetauschelement (21) und das zweite Gehäuse (22) jeweils mindestens einen Abschnitt aufweisen, welcher sich in Richtung der Drehachse (J1) über den Fliehkraftlüfter (11) auf einer Seite des Motors (15) erstreckt.

4. Klimaanlage nach Anspruch 1 oder 2, **dadurch gekennzeichnet, dass** die Wärmeaustauschvorrichtung (202) ferner ein poröses Element (223) umfasst, welches die Einführöffnung (222a) des zweiten Gehäuses (222) abdeckt.

5. Klimaanlage nach Anspruch 1 oder 2, **dadurch gekennzeichnet, dass** die Wärmetauschvorrichtung (302) ferner eine Luftstromleitplatte (323) umfasst, welche einen über die Einführöffnung (222a) des zweiten Gehäuses (322) eingeleiteten Luftstrom in die Längsrichtung des Wärmetauschelements (21) leitet.

## Revendications

1. Climatiseur **caractérisé en ce qu'**il comprend :
un dispositif de soufflante (1) comprenant :
un ventilateur centrifuge (11) ; et
un premier boîtier (13) qui loge le ventilateur centrifuge (11), le premier boîtier (13) ayant une ouverture d'admission (13a) prévue à un emplacement dans une direction d'un axe de rotation (J1) du ventilateur centrifuge (11) au niveau duquel l'ouverture d'admission (13a) fait face au ventilateur centrifuge (11) et ayant une ouverture de décharge (13b) prévue à un emplacement dans une paroi circonférentielle (13e) du premier boîtier (13) au niveau duquel l'ouverture de décharge (13b) fait face au ventilateur centrifuge (11) dans une direction perpendiculaire à l'axe de rotation (J1) du ventilateur centrifuge (11) ; et
un dispositif d'échange de chaleur (2) comprenant :
un élément d'échange de chaleur (21) qui est en forme de pilier ; et
un second boîtier (22) qui est de forme cuboïde et loge l'élément d'échange de chaleur (21), le second boîtier (22) ayant une ouverture d'introduction (22a) pour introduire, dans un intérieur du second boîtier (22), l'air déchargé, via l'ouverture de décharge (13b), par le ventilateur centrifuge (11) et ayant une ouverture d'éjection (22b) pour éjecter, à l'extérieur du second boîtier (22), l'air introduit dans l'intérieur du second boîtier (22) et échangé thermiquement par l'élément d'échange de chaleur (21),
**caractérisé en ce que** le dispositif d'échange de chaleur (2) comprend un certain nombre d'éléments de chauffage (21) agencés de sorte que la direction de longueur de chaque élément de chauffage (21) est parallèle à l'axe de rotation (J1) du ventilateur centrifuge (11) ;
une partie de chaque élément de chauffage (21) est agencée au-delà de la région A1, qui est la région dans laquelle une majeure partie de l'air déchargé via l'ouverture de décharge (13b) du premier boîtier (13) s'écoule, lorsque le dispositif de soufflante (1) est utilisé ; ladite région A1 comprend les bords de l'ouverture de décharge (13b) du premier boîtier (13) dans la direction de l'axe de rotation (J1) du ventilateur centrifuge (11) et correspond à une zone définie entre deux plans virtuels PL1 et PL2 qui sont perpendiculaires à l'axe de rotation J1 du ventilateur centrifuge (11) ;
dans lequel le second boîtier (22) est configuré de sorte qu'un écoulement d'air introduit dans l'intérieur du second boîtier (22) via l'ouverture d'introduction (22a) se répand dans une direction de longueur de l'élément d'échange de chaleur (21) venant en contact avec l'intégralité de chaque élément de chauffage (21).

2. Climatiseur selon la revendication 1, dans lequel l'ouverture d'éjection (22b) est prévue à un emplacement déplacé par rapport à l'ouverture d'introduction (22a) dans la direction de longueur de l'élément d'échange de chaleur (21), comme observé à partir d'une direction perpendiculaire à la direction de longueur de l'élément d'échange de chaleur (21).

3. Climatiseur selon la revendication 1 ou 2, **caractérisé en ce que** :
le dispositif de soufflante (1) comprend en outre un moteur (15) qui entraîne le ventilateur centrifuge (11), le moteur (15) étant agencé d'un côté du premier boîtier (13), le long de l'axe de rotation (J1), et
l'élément d'échange de chaleur (21) et le second boîtier (22) ont chacun au moins une partie s'étendant dans la direction de l'axe de rotation (J1) au-delà du ventilateur centrifuge (11) sur un côté du moteur (15).

4. Climatiseur selon la revendication 1 ou 2, **caractérisé en ce que** le dispositif d'échange de chaleur (202) comprend en outre un élément poreux (223) qui recouvre l'ouverture d'introduction (222a) du second boîtier (222).

5. Climatiseur selon la revendication 1 ou 2, **caractérisé en ce que** le dispositif d'échange de chaleur (302) comprend en outre une plaque de direction d'écoulement d'air (323) qui dirige un écoulement d'air introduit via l'ouverture d'introduction (222a) du second boîtier (322) dans la direction de longueur de l'élément d'échange de chaleur (21).
